Europäisches Patentamt

European Patent Office

Office européen des brevets

(19)

(11) Veröffentlichungsnummer: **0 063 313**

**A1**

(12) # EUROPÄISCHE PATENTANMELDUNG

(21) Anmeldenummer: **82102938.6**

(22) Anmeldetag: **06.04.82**

(51) Int. Cl.³: **H 02 G 11/02**

(30) Priorität: **22.04.81 DE 3115981**

(43) Veröffentlichungstag der Anmeldung:
**27.10.82 Patentblatt 82/43**

(84) Benannte Vertragsstaaten:
**AT BE CH DE FR GB IT LI NL SE**

(71) Anmelder: **Hirsekorn Kunststoffverarbeitung und Präzisionswerkzeug KG**
**Ritterstrasse 3**
**D-1000 Berlin 61(DE)**

(72) Erfinder: **Stöppler, Johann**
**Steristrasse 20**
**D-1000 Berlin 41(DE)**

(74) Vertreter: **Beyer, Werner, Dipl.Ing. et al,**
**Patentanwälte Dipl.-Ing. W. Beyer Dipl.-Wirtsch.-Ing. B. Jochem Staufenstrasse 36 Postfach 174109**
**D-6000 Frankfurt / Main(DE)**

(54) **Vorrichtung zum Aufspulen von Kabeln.**

(57) Die Vorrichtung zum Aufspulen von Kabeln, z.B. Telefonkabeln, besteht aus einer Kabeltrommel (2) die lösbar in einem geteilten Gehäuse (1, 3) mit zwei Kabelöffnungen (9, 10) gelagert ist. Als Lagerachse dient ein von außen in das Gehäuse einsteckbarer Schraubbolzen (5). Mit der Kabeltrommel (2) ist eine Drehfeder verbunden, deren anderes Ende mit dem einen Teil (6) einer lösbaren Steckkupplung (6, 8) zwischen Kabeltrommel und Gehäuse verbunden ist. Der Schraubbolzen (5) erstreckt sich durch die Steckkupplung (6, 8).

EP 0 063 313 A1

## Vorrichtung zum Aufspulen von Kabeln

Die Erfindung betrifft eine Vorrichtung zum Aufspulen von
Kabeln, z. B. Telefon- oder Lautsprecherkabeln, mit einer
Kabeltrommel, welche leicht lösbar in einem geteilten Gehäuse mit zwei am Umfang im wesentlichen diametral gegenüberliegenden Kabelöffnungen gelagert ist, mit welchem sie
im eingesetzten Zustand über eine lösbare Steckkupplung
und eine Drehfeder in Umfangsrichtung elastisch nachgiebig
verbunden ist.

Bei einem derartigen Kabelaufroller muß die Kabeltrommel zum
Einlegen des Kabels bei entspannter Drehfeder frei zugänglich
sein. Dann wird das Kabel in der Mitte der aufzuspulenden
Kabellänge an der Kabeltrommel festgelegt, und beide Kabelenden werden in gleicher Richtung, aber zweckmäßiger Weise in
getrennten Kammern der Kabeltrommel auf diese aufgewickelt.
Anschließend wird die Kabeltrommel wieder in das Gehäuse eingesetzt, wobei die Kabelenden durch die diametral gegenüberliegenden Kabelöffnungen, die möglichst zur Teilfuge des Gehäuses hin offen sein sollten, um von dorther die Kabelenden
quer zu ihrer Längserstreckung einlegen zu können, nach außen
geführt werden.

Es besteht die Möglichkeit, das eine Gehäuseteil axial soweit
über den Umfang der Kabeltrommel zu ziehen, daß bereits allein
nach seiner Abnahme die Kammern der Kabeltrommel zum Aufwickeln
des Kabels frei zugänglich sind, ohne daß die Kabeltrommel auch
noch von dem zweiten Gehäuseteil gelöst werden müßte (vergl.
DE-GM 79 27 o19 ). In diesem Fall kann eine unlösbare Verbindung zwischen der Kabeltrommel und dem zweiten Gehäuseteil
vorhanden sein, und auch die Drehfeder kann fest in Eingriff
mit der Kabeltrommel und dem zweiten Gehäuseteil bleiben.
Allerdings muß die Kabeltrommel fliegend an dem zweiten Gehäuseteil gelagert werden, dieses ist entsprechend kompliziert
auszulegen, und beim Aufwickeln des Kabels ist eine aus Kabeltrommel, Drehfeder und zweitem Gehäuseteil bestehende verhältnismäßig schwere Einheit zu handhaben. Außerdem lassen sich
Behinderungen des Einlegens und Aufwickelns des Kabels
durch die äußeren Randpartien des zweiten Gehäuseteils
nicht ganz vermeiden.

Es ist weiterhin bekannt (DE-OS 25 44 828 ), die Kabeltrommel beidseitig mit zentralen axialen Vorsprüngen zu versehen
und damit in beiden Gehäusehälften zu lagern.  In der einen
Gehäusehälfte ist dabei die Drehfeder fest eingebaut und mit
ihrem radial inneren Ende mit einem drehbar gelagerten Kupplungsteil mit zentraler, polygonaler Öffnung verbunden, in
welche der eine, entsprechend polygonal gestaltete Vorsprung
einsteckbar ist. Nachteilig ist bei dieser Ausführung, daß
die beiden Gehäusehälften am äußeren Umfang durch große Gewinde und /oder Schnappelemente fluchtend miteinander verbunden
werden müssen und deshalb sowie wegen der Lager und Lagerzapfen an den Gehäuseteilen und der Kabeltrommel verhältnismäßig komplizierte Spritzwerkzeuge für diese Teile gebraucht
werden. Darüberhinaus bereitet das Zusammenbringen und Verbinden
der Gehäuseteile sowohl bei der Montage als auch im Gebrauch
Schwierigkeiten.

Der Erfindung liegt die Aufgabe zugrunde, eine Vorrichtung
der eingangs genannten Art zu schaffen, die stärker belastbar ist, sich aber einfacher und billiger fertigen und leichter
öffnen und schließen läßt.

Vorstehende Aufgabe wird erfindungsgemäß dadurch gelöst, daß
die Gehäusehälften durch einen zentralen, von außen einsteckbaren Schraubbolzen zu verbinden sind, welcher gleichzeitig
die Lagerachse der Kabeltrommel bildet und eine Steckkupplung zwischen einer Gehäusehälfte und der fest mit der Kabeltrommel verbundenen Drehfeder durchdringt.

Durch die Erfindung wird eine sehr belastungsfähige und haltbare
Konstruktion geschaffen, die ohneweiteres auch für die Aufnahme dickerer und längerer Kabel geeignet ist, da sowohl die
beiden Gehäusehälften als auch die Kabeltrommel unmittelbar auf dem zentralen Schraubbolzen sitzen und auf dieser
gemeinsamen Achse gelagert sind. Die Last der Kabeltrommel
braucht demnach nicht über das Federlager am Gehäuse abgestützt zu werden. Da der Schraubbolzen die Teile auch
axial zusammenhält, können umständlich zu handhabende Gewinde und kraftaufwendige Schnappverschlüsse am Umfang der
Gehäusehälften entfallen. Dadurch lassen sich die Werkzeugkosten um bis zu 3o % senken. Weil auch die Montage einfacher
ist, können außerdem die Montagekosten um bis zu 5o% reduziert werden.

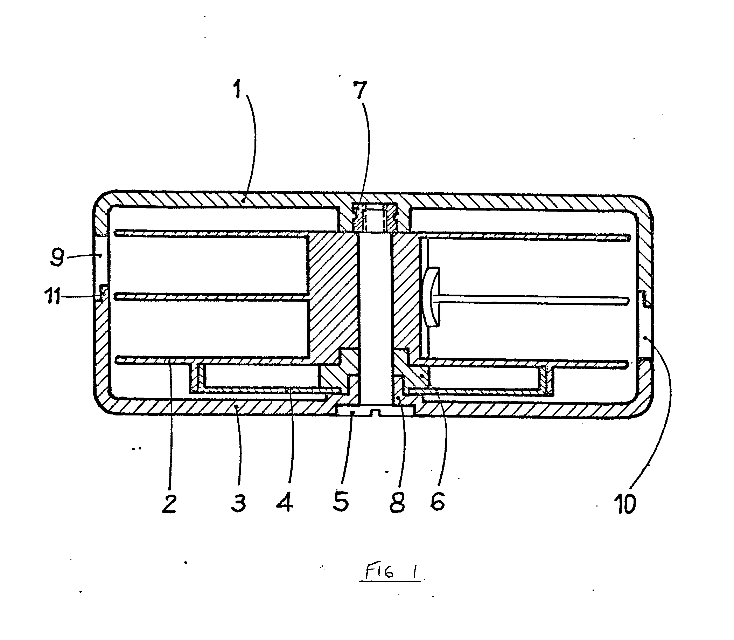

Die Erfindung wird nachstehend  anhand eines in der Zeichnung
dargestellten Ausführungsbeispiels näher erläutert. Die
Zeichnung zeigt im Schnitt einen Kabelaufroller, bestehend
aus zwei Gehäusehälften 1 und 3 sowie einer Kabeltrommel 2,
die in bekannter Weise zwei getrennte Kammern bzw. Wickelräume
hat. Diese Teile werden durch einen zentralen Schraubbolzen 5
zusammengehalten, der mit seinem flachen Kopf in einer passenden Einsenkung der Gehäusehälfte 3 liegt und mit seinem mit
Gewinde versehenen Ende in eine umspritzte Gewindebuchse 7 in
der Gehäusehälfte 1 eingreift. Da das mit Gewinde versehene
Ende des Schraubbolzens stufenförmig vom glatt zylindrischen
Schaft des Schraubbolzens abgesetzt ist, wird die Einschraubtiefe begrenzt. Der Kopf des Schraubbolzens 5 ist mit einem
ausreichend breiten Schlitz versehen, um ggf. auch mit einer
Münze die Schraube öffnen und Festziehen zu können.

An der Kabeltrommel 2 ist ein koaxial angeordnetes Federlager 6
drehbar gehalten. Es hat ebenso wie die Kabeltrommel 2 eine
mittlere  Bohrung, deren Durchmesser dem Schaft des Schraubbolzens 5 entspricht. Ein fest mit einem axialen Kragen an
der Kabeltrommel 2 verschweißter oder verklebter Deckel 4,
welcher das Federlager 6 übergreift, sichert dessen axiale
Lage mit Bezug auf die Kabeltrommel 2. Zwischen dem erwähnten axialen Kragen an der Kabeltrommel 2 oder dem Deckel 4 einerseits und dem Federlager 6 andererseits ist in dem Raum zwischen dem Deckel 4 und der Kabeltrommel 2 eine nichtgezeigte Spiralfeder als Drehfeder eingespannt. Sie wird, wenn die Kabeltrommel 2 bei drehfest gehaltenem Federlager 6 in der einen Richtung gedreht wird, zunehmend gespannt und ist danach bestrebt, sich wieder zu entspannen. Um das Federlager 6 relativ zum Gehäuse 1, 3 drehfest zu halten, ist es auf einem im Durchmesser erweiterten axial äußeren Bereich seiner mittleren Bohrung mit einem polygonalen Querschnitt oder einer Innenverzahnung ausgebildet, in die ein am Umfang entsprechend geformter innerer axialer Vorsprung 8 an der Gehäusehälfte 3 eingreift.

Am Umfang der Gehäusehälfte 1 ist eine Kabelöffnung 9 ausgespart, und auf an diametral gegenüberliegenden Seite hat die Gehäusehälfte 3 eine Kabelöffnung 1o. Beide Kabelöffnungen 9,1o sind zur Teilfuge des Gehäuses hin offen. Die Randkanten der Gehäusehälften 1, 3 sind, wie bei 11 gezeigt, stufenförmig ineinandergreifend ausgebildet, um einen genauen Sitz zu gewährleisten. Außerdem können axiale Vorsprünge und passende Ausnehmungen an den äußeren Rändern der Gehäusehälften 1 und 3 dafür sorgen, daß sich die Gehäusehälften nur in derjenigen relativen Drehwinkelstellung ineinandergreifend verbinden lassen, in welcher die Kabelöffnungen 9 und 1o einander gegenüberliegen.

Schließlich kann zur weiteren Erleichterung der Bedienung am Außendurchmesser des Kopfs des Schraubbolzens 5 eine Rändelung vorgesehen sein.

Zum Einlegen und Aufwickeln eines Kabels wird der Schraubbolzen 5 gelöst und die Kabeltrommel 2 aus dem Gehäuse entnommen. Nachdem das Kabel von Hand auf die Kabeltrommel aufgewickelt worden ist, wird diese zunächst in die Gehäusehälfte 3 eingesetzt, indem der polygonale Vorsprung 8 mit dem Federlager 6 in Eingriff gebracht wird. Dann wird das eine Kabelende in die Kabelöffnung 1o und das andere Kabelende auf der diametral gegenüberliegenden Seite auf den Rand der Gehäusehälfte 3 gelegt und die Gehäusehälfte 1 so aufgesetzt, daß sich das letztgenannte Kabelende durch die Kabelöffnung 9 erstreckt. Nunmehr braucht nur noch der Schraubbolzen 5 von außen durch
die Gehäusehälfte 3, das Federlager 6 und die Kabeltrommel 2
hindurchgesteckt und in die in der Gehäusehälfte 1 eingelassene Gewindebuchse 7 eingeschraubt zu werden.

In bevorzugter Ausführung ist an der einen Seite der Kabeltrommel eine Freilaufklappe von der Art angebracht, wie sie
in der De-QS 29 19 oo5   beschrieben ist.

Schutzansprüche

1. Vorrichtung zum Aufspulen von Kabel, z. B. Telefonkabeln, mit einer Kabeltrommel, welche leicht lösbar in einem geteilten Gehäuse mit zwei am Umfang im wesentlichen diametral gegenüberliegenden Kabelöffnungen gelagert ist, mit welchem sie im eingesetzten Zustand über eine lösbare Steckkupplung und eine Drehfeder in Umfangsrichtung elastisch nachgiebig verbunden ist, d a d u r c h  g e k e n n - z e i c h n e t, daß die Gehäusehälften (1, 3) durch einen zentralen, von außen einsteckbaren Schraubbolzen (5) zu verbinden sind, welcher gleichzeitig die Lagerachse der Kabeltrommel (2) bildet und eine Steckkupplung (6,8) zwischen einer Gehäusehälfte (3) und der fest mit der Kabeltrommel (2) verbundenen Drehfeder durchdringt.

2. Vorrichtung nach Anspruc 1, d a d u r c h  g e k e n n - z e i c h n e t, daß die Drehfeder eine Spiralfeder ist, deren radial äußeres Ende an der Kabeltrommel (2) und deren radial inneren Ende an einem an der Kabeltrommel (2) koaxial drehbar gelagerten Federlager (6) festgelegt ist, welches einen Teil der Steckkupplung (6, 8) bildet.

3. Vorrichtung nach Anspruch 2, d a d u r c h  g e k e n n - z e i c h n e t, daß die Spiralfeder durch einen fest mit der Kabeltrommel (2) verbundenen Deckel (4) überdeckt ist.

4. Vorrichtung nach Anspruch 3, d a d u r c h  g e k e n n - z e i c h n e t, daß der Deckel (4) eine Lagerung und/oder eine Lagesicherung für das Federlager (6) bildet.

5. Vorrichtung nach einem der Ansprüche 1 bis 4, d a d u r c h  g e k e n n z e i c h n e t, daß die Steckkupplung (6,8) aus einer auf einem zentralen Vorsprung (8) an der einen Gehäusehälfte (3) ausgebildeten Außenverzahnung und einer passenden Innenverzahnung  an dem Federlager (6) besteht.

6.    Vorrichtung nach einem der Ansprüche 1 bis 5, d a d u r c h -
      g e k e n n z e i c h n e t, daß der Schraubbolzen (5)
      in ein Gewinde (7) eines inneren Sacklochs der einen Ge-
      häusehälfte (1) einschraubbar ist.

7.    Vorrichtung nach Anspruc 6, d a d u r c h  g e k e n n -
      z e i c h n e t, daß die Einschraublänge des Schraubbolzens (5) durch Anschlag begrenzt ist.

8.    Vorrichtung nach einem der Ansprüche 1 bis 7, d a d u r c h
      g e k e n n z e i c h n e t, daß der Schraubbolzen (5) eine
      Schlitzschraube mit einem flachen, in eine Ausnehmung des
      Gehäuses (1, 3) einsenkbaren Kopf und mit einem ausreichend
      breiten Schlitz ist, um eine Münze einzuführen.

0063313

FIG 1

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A- 937 228 (CRESSENT) <br> * Seite 2, Zeile 36 - Seite 3, Zeile 8; Figuren 1, 2 * | 1 | H 02 G 11/02 |
| A | FR-A-1 187 940 (DEVILLERS) <br> * Seite 1, rechte Spalte, Absatz 5 - Seite 2, linke Spalte, Absatz 1; Figuren 1,2 * | 1 | |
| A | DE-C- 837 233 (GRAEWE) <br> * Seite 2, Zeilen 38-83; Figuren 1-3 * | 1 | |
| A | DE-A-2 810 023 (FUSO KEIGOKIN) <br> * Seite 6 - Seite 7, Absatz 2; Figuren 1-4 * | 1-4 | |
| A | US-A-3 182 139 (VACUUM CLEANER) <br> * Spalte 3, Zeile 56 - Spalte 6, Zeile 19; Figuren 1-10 * | 1 | RECHERCHIERTE SACHGEBIETE (Int. Cl. 3) |
| A | US-A-2 429 675 (EYPPER) <br> * Spalte 1, Zeile 43 - Spalte 3, Zeile 7; Figuren 1-3 * | 1,6-8 | H 02 G 11/00 <br> F 21 V 21/00 <br> H 04 M 1/00 <br> B 65 H 75/00 |
| A | US-A-2 449 464 (EYPPER) <br> * Spalte 1, Zeile 34 - Spalte 3, Zeile 13; Figuren 1-4 * | 1,6-8 | |

Der vorliegende Recherchenbericht wurde für alle Patentansprüche erstellt.

| Recherchenort | Abschlußdatum der Recherche | Prüfer |
|---|---|---|
| DEN HAAG | 21-07-1982 | LOMMEL A. |